# EUROPEAN PATENT SPECIFICATION

(11) **EP 3 128 246 B1**
(45) Date of publication and mention of the grant of the patent: **03.07.2019**
(21) Application number: 16382376.8
(22) Date of filing: 29.07.2016
(51) Int. Cl.: F24F 7/007, F24F 13/04, F24F 13/08, F24D 19/00, F24D 19/06, F24F 7/00

(54) **DESTRATIFIER FOR DOMESTIC USE**
DESTRATIFIZIERER FÜR DEN HAUSGEBRAUCH
DÉSTRATIFICATEUR À USAGE DOMESTIQUE

(30) Priority: 03.08.2015 ES 201531154
(43) Date of publication of application: 08.02.2017
(73) Proprietor: Confort Direct, S.L., 33202 Gijon (Asturias) (ES)
(72) Inventor: JULIO FERRERO, Martín, 33202 GIJÓN (Asturias) (ES)
(74) Representative: Herrero & Asociados, S.L.

(56) References cited:
- EP-A2- 0 756 139
- DE-A1- 1 961 379
- FR-A1- 2 774 458
- GB-A- 2 353 347

## Description

### Technical field of the invention

The present invention relates to the technical field of air-conditioning and heating device for domestic use, specifically to a destratifier of the air in a room.

### Background of the invention

At present, there is wide usage in practically all homes of heating systems in winter and air-conditioning devices in summer. The purpose of installing these types of systems and the use of the same is to maintain a comfortable temperature in the room.

These systems, whether they are for heating or air-conditioning, have a drawback due to the inherent behavior of the air as a function of the temperature of the same. Therefore when the air in a room is heated by means of a heating system, the hot air which leaves the system, tends to rise to higher levels since it weighs less than the cold air present in the room, consequently stratification of the air is produced such that the hotter air is concentrated in a layer which ascends from the heater from where said hot air is expelled to the ceiling, leaving the rest of the room much colder than this stratum created by the ascent of the hot air.

In the case of the air-conditioning, the same occurs, but in the opposite sense. That is to say, the cold air weighs more, consequently the air at a lower temperature which is expelled by the air-conditioning device tends to descend to the lowest level, causing the air present at a greater temperature to ascend. Therefore, in a room which is cooled with an air-conditioning device, a stratum, made of very cold air, descending from said device to the floor is produced, while in the rest of the room, strata with an ascending temperature are formed as they move away from the stratum with a colder temperature.

Therefore, with these devices, it is impossible to achieve an appropriate comfort temperature in the entire room without strata with different temperatures forming.

In the state of the art, in order to solve this problem, there are destratifiers, e.g. the one shown in FR2774458, which consist of very powerful axial ceiling fans which displace a high volume of air. This document discloses a destratifier according to the preamble of claim 1. They are geared towards industrial premises and large spaces where the stratification of the air is very significant.

These destratifiers are air mixers composed of a mixing turbine which produces a mixture and a movement of the hot air layers situated at the ceiling and the colder air layers close to the floor and displaces them towards the area of occupation, uniformly distributing the temperature.

These mixers available on the market are aimed at causing a descent of the hot air accumulated in the high layers in order to try to mix them with the colder air present in lower layers and to be able to thereby increase the temperature in large premises with high ceilings. However, they do not solve the inverse problem present when the air-conditioning is operating and a stratum of very cold air is produced from the device towards the floor and strata with an ascending temperature all around, even leading to the presence of quite warm areas.

Moreover, they are destratifiers with large dimensions, intended to be used in large spaces, but they are not intended or designed for smaller domestic spaces.

### Description of the invention

The destratifier for domestic use which is presented here is a destratifier according to claim 1.

According to a preferred embodiment, the fixing means of the fan to the wall of the room are formed by screwing means for screwing the fan and the rear face of the cover housing of the same on said wall.

According to a preferred embodiment, the destratifier comprises an electrical resistor situated below the shelf.

According to a preferred embodiment, the shelf is made of a material that spreads the heat.

According to another aspect, in a preferred embodiment, the tangential fan comprises individually orientable rigid blades in the air expulsion area.

In a preferred embodiment, the tangential fan of the destratifier comprises the motor arranged on one of the innermost corners of the cover housing. Together with the fixing means of the fan to the wall, this contributes to the destratifier not generating noise towards the exterior when operating.

According to a preferred embodiment, said tangential fan comprises a filter or means for treating the air in the expulsion or impulsion area.

In this case and according to a preferred embodiment, the filter is an ionizer, a dehumidifier, a humidifier, a dust filter, a pollen filter or in general these elements can be defined as means for treating the air which improves the environmental characteristics of the room. These means for treating the air are any apparatus or device which modifies the physical or chemical properties of the air which passes through them, such as for example the previously specified means, or others; for example one air treatment device is photocatalysis, which consists of the treatment of the air by means of UV rays and TiO2, by way of which common contaminants in the atmosphere are eliminated such as nitrogen oxides, sulfur oxides and volatile organic compounds by means of an oxidation process.

According to another aspect, in a preferred embodiment and in the case where the length of the destratifier so requires, said destratifier comprises two fans positioned in a line where the motor of each fan is situated in one of the innermost corners of the housing respectively. Like in the case of a fan, this contributes to the fact that no noise is generated in the exterior of the housing.

The destratifier can have a radiator below it.

With the destratifier for domestic use proposed here, a significant improvement is obtained with respect to the state of the art.

This is because a device is achieved which absorbs the air through the interior part thereof and expels it parallel to the floor, allowing the air of the room to be destratified and a comfort area to be obtained in practically the entire area in which the individuals are located.

By achieving this destratification, an energy saving and therefore a significant economic saving is achieved.

The shelf, on the one hand, contributes to the exit of the air from the fan parallel to the floor, while, on the other hand, helps to conceal the fan, achieving an improved aesthetic for the destratifier and it can be used for the placement of objects on the same.

Owing to the manner of fixing the destratifier to the wall of the room, a reduction of the vibrations of said destratifier is achieved, considerably reducing the emission of noise. The shelf similarly contributes to this as it covers the fan.

At the same time, it is a destratifier which, in addition to allowing the use thereof in rooms in homes or locations with similar dimensions, enables the use thereof for achieving a destratification of the room both when the temperature of the same is increased in winter by means of heaters and when it is decreased in summer both by means of the use of air-conditioning devices and without the use of the same, since the tangential fan absorbs the cold air which, as it weighs more, is located at lower levels and expels it parallel to the floor, redistributing it through the room.

Moreover, there is the option, in the case of use together with heaters in the room, that the shelf is made of a material that spreads the heat and therefore can be used for heating or drying objects situated on said shelf.

Therefore, this destratifier for domestic use is a simple and easy-to-use device, which is very efficient for obtaining a wide comfort area in the rooms and which is also aesthetic and has reduced noise emission.

### Brief description of the drawings

With the aim of aiding a better understanding of the characteristics of the invention, according to a practical preferred exemplary embodiment of the same, a series of drawings are provided as an integral part of said description, where the following is illustrated in an illustrative and non-limiting manner:
Figure 1 shows a perspective view of the destratifier for domestic use for a preferred embodiment of the invention.
Figures 2.1 and 2.2 shows a view of the stratification of the air of the room in one situation with an air-conditioning device for the case where there is no destratifier for domestic use and for the case where said destratifier is present for a preferred embodiment of the invention.
Figures 3.1 and 3.2 show a view of the stratification of the air of the room in a situation without the air-conditioning device for the case where there is no destratifier for domestic use and for the case where said destratifier is present for a preferred embodiment of the invention.
Figure 4 shows a sectional view of the means for fixing the destratifier to the wall.
Figure 5 shows a perspective view of the destratifier for domestic use with the radiator situated below it and operational for a preferred embodiment of the invention.

### Detailed description of a preferred embodiment of the invention

In view of the figures provided, it can be observed how, in a preferred embodiment of the invention, the destratifier proposed here comprises a tangential fan situated in the interior of a cover housing 2 and a horizontal shelf 3 or ledge situated on said cover housing 2. The cover housing 3 allows the absorption of the air through the lower part of the tangential fan and the expulsion of the same parallel to the floor.

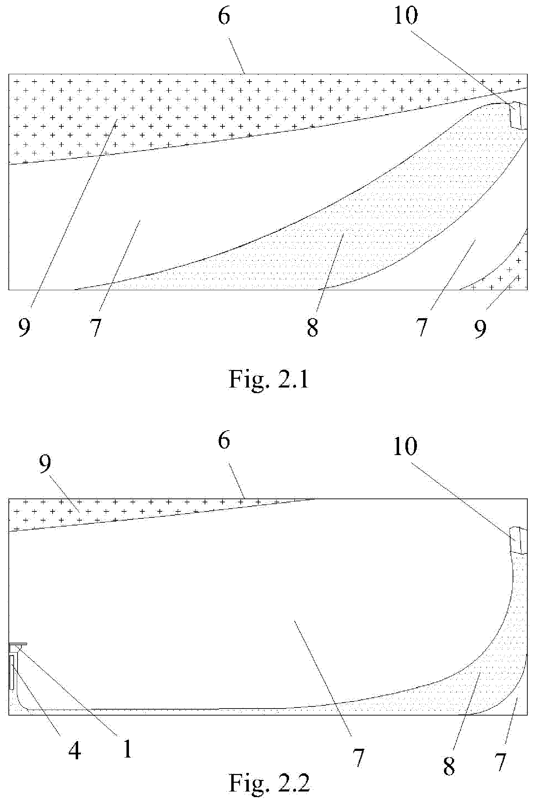

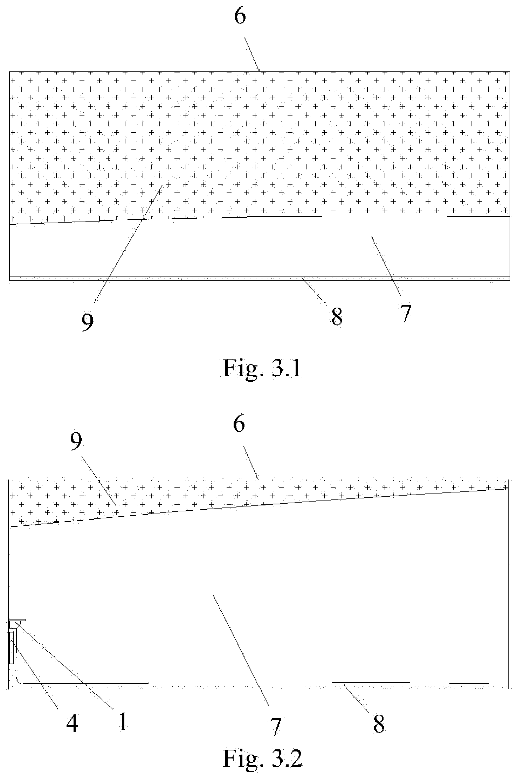

The tangential fan, as is shown in Figures 2.2 and 3.2, is situated on the wall of the room 6, at a height of approximately 1 m from the floor such that it is ensured that the comfort area encompasses the majority of the body of the occupants of the room.

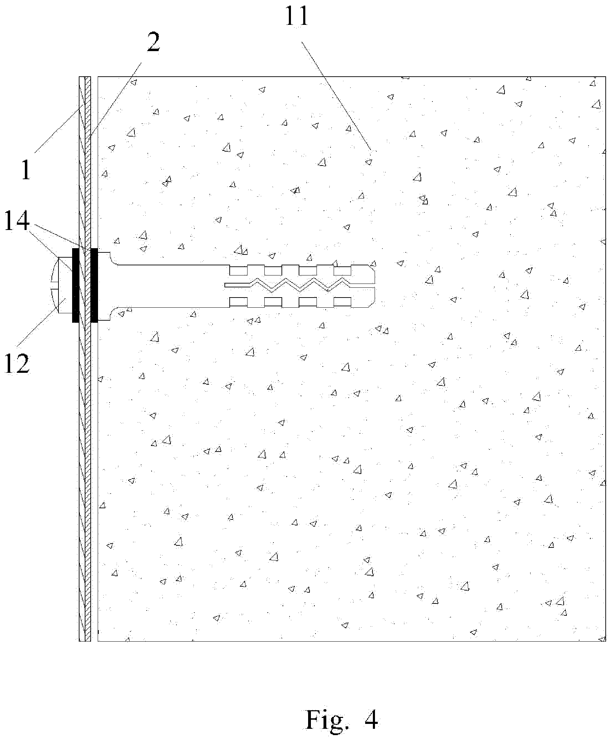

The fan is fixed to said wall by means of fixing means which can be observed in Figure 4 and which, owing to a groove in the rear part of the destratifier 1, said fan and the housing 2 can be fixed together and directly to the wall 11 by means of fixing means, formed from a screw 12, with two damping washers 14 without the need for intermediate elements such as typical lugs. These fixing means ensure better fixing of the assembly to the wall, preventing possible vibrations and in this way eliminating the noise normally caused due to said vibrations.

In this preferred embodiment of the invention, these fixing means are formed by screwing the fan and the rear face of the cover housing 2 of said tangential fan on said wall. In this way, the vibrations are reduced and the noise caused by said vibrations is therefore reduced.

As can be observed in Figures 2.2 and 3.2, in this preferred embodiment of the invention, the horizontal shelf 3 has a length equal to the length of the housing 2 and a width with a dimension such that it protrudes at least 5 cm with respect to the width of said housing 2. In this preferred embodiment of the invention, the width of the shelf 3 is specifically 5 cm. This dimension is the minimum which ensures that the distribution in the room of the air expelled by the tangential fan from the housing takes place parallel to the floor.

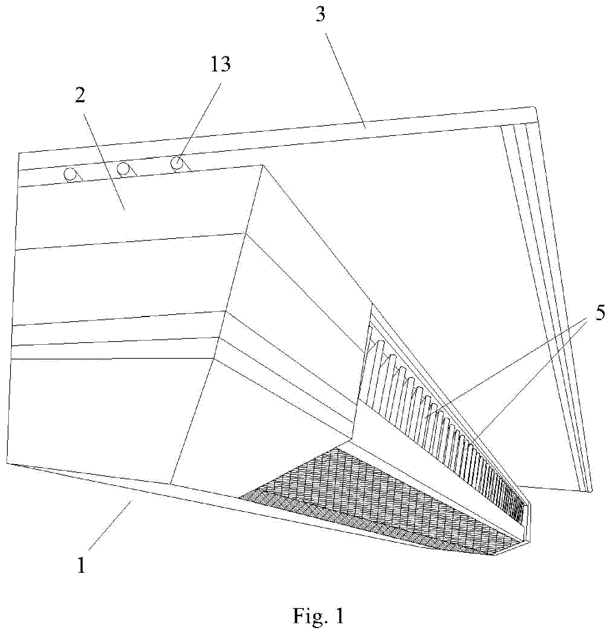

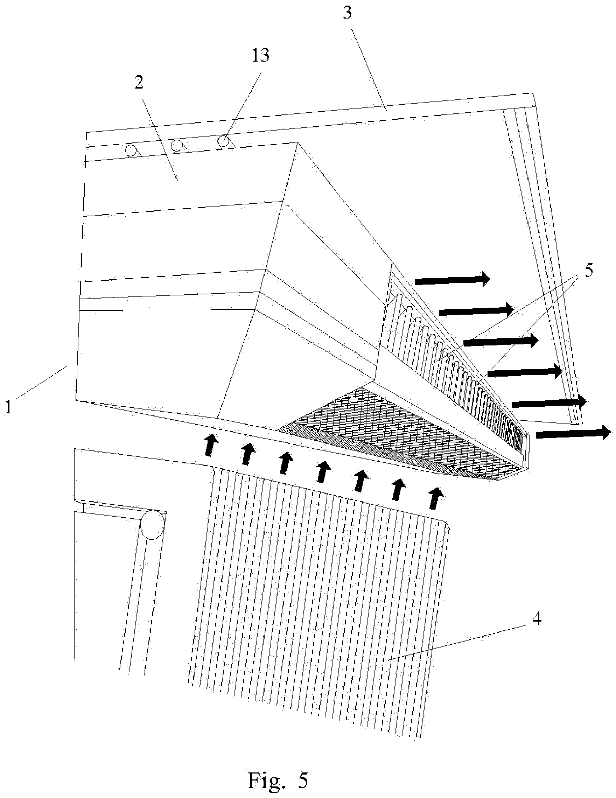

In this preferred embodiment of the invention, as is shown in Figure 1, the destratifier 1 comprises an electrical resistor 13 situated below the shelf 3 and, at the same time, comprises a radiator 4 situated below the tangential fan. In this way, when the radiator is operating, the fan can be used to heat the room, as is shown in Figure 5. In this way, the destratifier makes it possible for one radiator to be suitable for working with water at a lower temperature, this means there is a considerable energy saving, since it can work in the home with condensing boilers or a heat pump.

At the same time, in this preferred embodiment of the invention, the shelf 3 is made of a material that spreads the heat such that when the radiator 4 is turned off, the fan is used for cooling the shelf, but maintaining the objects on top of the shelf 3 hot, owing to the presence of said electrical resistor 13. In this case, this shelf can be used to heat objects, such as for example baby's clothing.

As is shown in Figure 1, in this preferred embodiment of the invention, the tangential fan comprises individually orientatable rigid blades 5 in the air expulsion area.

The motor of the tangential fan of the destratifier 1 in this preferred embodiment of the invention is arranged on one of the innermost corners of the cover housing 2 in order to reduce the noise generated by the same to a minimum and prevent said noise being perceptible at the exterior of the housing.

At the same time, in this preferred embodiment of the invention, the tangential fan of the destratifier 1 comprises a filter, specifically a dehumidifier in the expulsion area.

In order to understand the destratification produced by this destratifier 1 for domestic use, the following situations are provided, comparing them in the case where the destratifier 1 is present with the case where it is not present.

Figure 2.1 thus shows a situation in which there is an air-conditioning device 10 in a room 6, but this destratifier 1 for domestic use is not present. A stratum of cold area 8 with the shape of a descending band is produced from said air-conditioning device 10, due to the greater weight of the cold air which descends, displacing the hot air. Around this cold area 8, a comfort area 7 is created which adopts the shape of a band at each side of said cold area 8 and at the outermost parts, a hot area 9 in the shape of a band at each side of the comfort area 7.

In this case, it is observed that the comfort area 7 does not occupy the central part of the room 6, which is instead occupied by the cold area 8 produced by the direct expulsion of cold air, consequently the individuals in the room are going to be more in contact with the cold area 8. This is uncomfortable and usually leads to the air-conditioning having to be turned off at time intervals with the greater expense that this entails.

In Figure 2.2, the change present in the strata of the room 6 is shown when, in the previous case, the destratifier 1 for domestic use of the invention is positioned. As can be observed, the presence of the destratifier 1 produces a widening of the comfort area 7 to the entire central area of the room 6, consequently the occupants of the room are going to notice an optimal temperature in the area through which they move, the cold area 8 and the hot area 9 being limited to the outermost parts of the room 6. Therefore, when the destratifier 1 for domestic use is installed so that it operates together with an air-conditioning device, greater comfort and less consumption is achieved, since it means that the temperature to be fixed in the air-conditioning device can be reduced.

In Figure 3.1, a different situation is shown, in which there is no air-conditioning device 10 or destratifier 1 present. In this case, there is a very small cold area 8, since in summer the air at low temperature is minimal at the lower level of the room 6, and then a band corresponding to the comfort area 7 in a middle-lower layer and a hot area 9 in the middle-upper layer. This is therefore not a desirable situation either from the point of view of comfort.

In Figure 3.2, the case is illustrated in which the destratifier 1 of the invention is added to the room 6 where there was no air-conditioning device 10. In this case, as can be observed, the comfort area 7 can be very significantly widened in the entire central habitable area of the room 6. In this case, greater comfort and a thermal sensation of a temperature that is lower than in the case of there being no air-conditioner or destratifier 1 are achieved.

With the destratifier for domestic use presented here, significant improvements are achieved with respect to the state of the art both from the point of view of the improvement in the temperature and comfort conditions of the room, and in the economic improvement which entails the lower energetic expense which is achieved since the air of said room is destratified.

A device which optimally distributes the air in the room is therefore achieved, utilizing the cold air emitted by an air-conditioning device or the hot air emitted by a radiator and distributing it more effectively so that it is distributed through the entire room.

It is therefore a very efficient destratifier for domestic use which obtains a comfort area widened to the entire area of use of the individuals and does so simply and by means of a smaller, aesthetic device which emits little noise.

## Claims

1. A destratifier (1) for domestic use, which comprises at least one fan and a cover housing (2), the fan being situated in the interior of a cover housing (2), said destratifier being suitable for being situated on the wall of the room (6) by means of fixing means, at a height of 1 m from the floor where the cover housing (2) allows the absorption of the air through the lower part of the tangential fan and the expulsion of the same parallel to the floor, said destratifier further comprising an element (3) on the cover housing (2) of the fan which has a length equal to or greater than the length of the housing (2),
**characterized in that**
said fan is a tangential fan, and
said element (3) is a horizontal shelf or ledge which has a width with a dimension such that it protrudes at least 5 cm with respect to the width of said housing (2).

2. The destratifier (1) for domestic use according to claim 1, **characterized in that** it comprises means for fixing the fan to the wall of the room (6) formed by screwing means for screwing the fan and the rear face of the cover housing (2) of said tangential fan on said wall.

3. The destratifier (1) for domestic use according to any of the preceding claims, **characterized in that** it comprises an electrical resistor (13) situated below the shelf (3).

4. The destratifier (1) for domestic use according to any of the preceding claims, **characterized in that** the shelf (3) is made of a material that spreads the heat.

5. The destratifier (1) for domestic use according to any of the preceding claims, **characterized in that** the tangential fan comprises individually orientatable rigid blades (5) in the air expulsion area.

6. The destratifier (1) for domestic use according to any of the preceding claims, **characterized in that** the tangential fan comprises the motor arranged on one of the innermost corners of the cover housing (2).

7. The destratifier (1) for domestic use according to any of the preceding claims, **characterized in that** the tangential fan comprises a filter or means for treating the air in the expulsion or impulsion area.

8. The destratifier (1) for domestic use according to claim 7, **characterized in that** the filter is an ionizer, a dehumidifier, a dust filter, a pollen filter or other means for treating the air which improve the environmental characteristics of the room.

9. The destratifier (1) for domestic use according to any of the preceding claims, **characterized in that** it comprises two fans positioned in line, where the motor of each fan is situated in one of the innermost corners of the housing (2) respectively.

## Patentansprüche

1. Destratifizierer (1) für den Hausgebrauch, der zumindest ein Gebläse und ein Abdeckgehäuse (2) umfasst, wobei das Gebläse im Inneren eines Abdeckgehäuse (2) angeordnet ist, wobei der Destratifizierer geeignet ist, um an der Wand des Raums (6) mittels Befestigungsmitteln in einer Höhe von 1 m vom Boden entfernt angeordnet zu sein, in der das Abdeckgehäuse (2) das Ansaugen der Luft durch den unteren Teil des Tangentialgebläses und den Ausstoß derselben parallel zum Boden ermöglicht, wobei der Destratifizierer ferner ein Element (3) an dem Abdeckgehäuse (2) des Gebläses umfasst, das eine Länge gleich oder größer als die Länge des Gehäuses (2) aufweist, **dadurch gekennzeichnet, dass** das Gebläse ein Tangentialgebläse ist und das Element (3) ein horizontales Brett oder eine Leiste ist, deren Breite so bemessen ist, dass sie in Bezug auf die Breite des Gehäuses (2) zumindest 5 cm hervorsteht.

2. Destratifizierer (1) für den Hausgebrauch nach Anspruch 1, **dadurch gekennzeichnet, dass** dieser Mittel zum Befestigen des Gebläses an der Wand des Raumes (6) aufweist, die durch Schraubmittel zum Verschrauben des Gebläses und der Rückseite des Abdeckgehäuses (2) des Tangentialgebläses an der Wand ausgebildet sind.

3. Destratifizierer (1) für den Hausgebrauch nach einem der vorhergehenden Ansprüche, **dadurch gekennzeichnet, dass** dieser einen elektrischen Widerstand (13) umfasst, der unterhalb des Bretts (3) angeordnet ist.

4. Destratifizierer (1) für den Hausgebrauch nach einem der vorhergehenden Ansprüche, **dadurch gekennzeichnet, dass** das Brett (3) aus einem Material besteht, das die Wärme verteilt.

5. Destratifizierer (1) für den Hausgebrauch nach einem der vorhergehenden Ansprüche, **dadurch gekennzeichnet, dass** das Tangentialgebläse einzeln ausrichtbare starre Blätter (5) im Luftausstoßbereich aufweist.

6. Destratifizierer (1) für den Hausgebrauch nach einem der vorhergehenden Ansprüche, **dadurch gekennzeichnet, dass** das Tangentialgebläse den Motor umfasst, der an einer der innersten Ecken des Abdeckgehäuses (2) angeordnet ist.

7. Destratifizierer (1) für den Hausgebrauch nach einem der vorhergehenden Ansprüche, **dadurch gekennzeichnet, dass** das Tangentialgebläse einen Filter oder Mittel zur Behandlung der Luft im Ausstoß- oder Impulsbereich umfasst.

8. Destratifizierer (1) für den Hausgebrauch nach Anspruch 7, **dadurch gekennzeichnet, dass** die Filter ein Ionisator, ein Entfeuchter, ein Staubfilter, ein Pollenfilter oder andere Mittel zum Behandeln der Luft sind, die die Umwelteigenschaften des Raumes zu verbessern.

9. Destratifizierer (1) für den Hausgebrauch nach einem der vorhergehenden Ansprüchen, **dadurch gekennzeichnet, dass** dieser zwei in Reihe positionierte Gebläse umfasst, wobei der Motor jedes Lüfters jeweils in einer der innersten Ecken des Gehäuses (2) angeordnet ist.

## Revendications

1. Déstratificateur (1) pour usage domestique, qui comprend au moins un ventilateur et un boîtier de recouvrement (2), le ventilateur étant situé à l'intérieur d'un boîtier de recouvrement (2), ledit déstratificateur étant approprié pour être situé sur le mur de la pièce (6) par l'intermédiaire de moyens de fixation, à une hauteur de 1 m à partir du sol, dans lequel le boîtier de recouvrement (2) permet l'absorption de l'air à travers la partie inférieure du ventilateur tangentiel et l'expulsion de l'air en question parallèlement au sol, ledit déstratificateur comprenant en outre un élément (3) sur le boîtier de recouvrement (2) du ventilateur dont la longueur est égale ou supérieure à la longueur du boîtier (2), **caractérisé en ce que** ledit ventilateur est un ventilateur tangentiel, et ledit élément (3) est une étagère ou une moulure horizontale qui possède une largeur dont la dimension est telle qu'elle fait saillie sur au moins 5 cm par rapport à la largeur dudit boîtier (2).

2. Déstratificateur (1) pour usage domestique selon la revendication 1, **caractérisé en ce qu'**il comprend des moyens pour fixer le ventilateur au mur de la pièce (6), formés par des moyens de vissage pour visser le ventilateur et la face arrière du boîtier de recouvrement (2) dudit ventilateur tangentiel sur ledit mur.

3. Déstratificateur (1) pour usage domestique selon l'une quelconque des revendications précédentes, **caractérisé en ce qu'**il comprend une résistance électrique (13) située en dessous de l'étagère (3).

4. Déstratificateur (1) pour usage domestique selon l'une quelconque des revendications précédentes, **caractérisé en ce que** l'étagère (3) est constituée d'un matériau qui répand la chaleur.

5. Déstratificateur (1) pour usage domestique selon l'une quelconque des revendications précédentes, **caractérisé en ce que** le ventilateur tangentiel comprend des lames rigides (5) qui peuvent être orientées de manière individuelle, dans la zone d'expulsion de l'air.

6. Déstratificateur (1) pour usage domestique selon l'une quelconque des revendications précédentes, **caractérisé en ce que** le ventilateur tangentiel comprend le moteur disposé sur un des coins les plus internes du boîtier de recouvrement (2).

7. Déstratificateur (1) pour usage domestique selon l'une quelconque des revendications précédentes, **caractérisé en ce que** le ventilateur tangentiel comprend un filtre ou un moyen pour le traitement de l'air dans la zone d'expulsion ou d'appel.

8. Déstratificateur (1) pour usage domestique selon la revendication 7, caractérisé en le filtre est un ioniseur, un déshumidificateur, un filtre à poussière, un filtre à pollen ou un autre moyen destiné à traiter l'air, ce qui améliore les caractéristiques environnementales de la pièce.

9. Déstratificateur (1) pour usage domestique selon l'une quelconque des revendications précédentes, **caractérisé en ce qu'**il comprend deux ventilateurs disposés en ligne, dans lequel le moteur de chaque ventilateur est situé dans un des coins les plus internes du boîtier (2), respectivement.
